# EUROPEAN PATENT APPLICATION

(11) **EP 0 701 852 A1**
(43) Date of publication of application: **20.03.1996**
(21) Application number: 94500070.1
(22) Date of filing: 19.04.1994
(51) Int. Cl.: B01D 25/12, B30B 9/06, B01D 25/164, B01D 25/19

(54) **Sludge filter and method of performing filtering with this filter**

(30) Priority: 13.08.1993 ES 9301802
(71) Applicant: TECNICAS HIDRAULICAS, S.A., E-48100 Mungia (Bizkaia) (ES)
(72) Inventor: Potet Fortuny, Joaquin, E-08026 Barcelona (ES)
(74) Representative: Urteaga Simarro, José Antonio

(57) **Abstract**

A sludge filter and its use as a filtering method. A set of filtering plates provided with a side edge connected towards the exterior on which the said plates meet. The filtering plates are operated by a set of side members that move a mobile support towards or away from another fixed support, driven by hydraulic cylinders. The travel of the mobile support is regulated by a stroke end. Firstly, the plates approach each other, followed by an intake of sludge, until this intake stops due to the action of a sensor that determines the dryness of the cakes. A second action of the cylinders completes the filtering. An installation and a process are achieved which are economic and require less maintenance than traditional systems.

## Description

This invention relates to filter presses intended for cleaning waters that contain sludge, mud, dirt, slime, slurry, etc., through filtering. The use of these presses is very entended since they cover a wide range of industries.

Presses of this type are known made up of a series of parallel plates made of iron, plastic, etc., and assembled on guides along which they slide. The cleaning filters are arranged between the said plates and the two ends of the assembly are fitted with supports, one fixed and the other movable. The movable support is fitted, by pressure , onto the set of plates and filters, and operated by a hydraulic device powered by a manual or electric pump that maintains the pressure needed to achieve filtering by means of an auxiliary filling pump that creates pressure to push through the liquid to be filtered while depositing the sludge and dirt in the cloths that form the said filters, with which the clean liquid flows towards the bottom of the plates.

In some of these known filter presses, a rubber part is fitted behind the filter cloths, with air or water being inserted into this rubber in order to inflate it. In other presses, instead of using rubber, filter membranes are fitted.

In some of the filters mentioned, the thickness of the cakes is fixed, depending on the shape of the filtering plates, and these have to be changed if any alteration in the thickness of the cake is required, which is a disadvantage.

Some of the other known filters have the drawbacks of their excessive complexity and price.

The object of the present invention is to provide a filter press with filtering chambers of adjustable thickness thanks to a particular leak-tightness system which is claimed.

Another object of the invention is to provide elasticity in the closure of the filtering chambers.

A third object of the invention is to obtain a method of working with which a greater output is achieved from the unit, thus making it more economical and with less maintenance.

In order to implement these objectives, the invention proposes a filter press provided with a support bedplate on which a hydraulic unit driven by a motor is assembled.

The bedplate has a fixed vertical support to which a vertical plate is fitted. Starting from this fixed support are a set of side guides, between which a set of mobile plates are situated, supported on the said guides by means of side runners or rolls which are fitted to them. The side guides are in turn fixed to another end support secured to the bedplate, so that the guides are kept in a horizontal position.

There is another mobile support, fitted with another plate, between the two fixed supports. This mobile support is connected to the first fixed support and to the intermediate plates by means of two pairs of connecting-rods, one pair on each side of the unit.

On the opposing faces of the different plates and around their edges are situated rubber profiles, provided with an outwardly convex rounded cross-section by way of joints or gaskets, so that when the mobile plate moves against the fixed plate, it forms the filtering chamber(s), whose thickness is variable. The plates are provided with grooves, for example, or some other method that collects the water from the sludge and conducts it towards outlets in the bottom of the different plates in a way which is already known.

The outer side faces are joined to two sets of two connecting-rods, as was mentioned previously. Each connecting-rod is connected to the fixed plate and to the mobile plate and, where appropriate, to the intermediate plates.

At the same time, the fixed and mobile supports are connected by side members, which allow the distance between both supports to be varied, in the final stage of hydraulic pressing, on varying the thickness of the cake to be obtained, as will be explained later.

The side members in question are operated by hydraulic cylinders, one for each pair of side members, and the cylinders receive the fluid from the pump placed in the bedplate, all so that the mobile support with the mobile plate can be moved closed to or further from the fixed support and plate.

The support fixed to the bedplate that acts as a support for the two side members receives a stroke end switch, adjustable in position, by means of which the closure of the mobile support-mobile plate against the fixed support-fixed plate of he unit is controlled, on activating the cylinders to operate the side members and logically the thickness of the cake is defined.

Two sensors are arranged in the bedplate, by means of which the amount of water deposited after filtering is controlled and consequently the dryness of the cake is measured.

In general terms, and in accordance with the invention, the working process is carried out by performing a first pressing of the filters by means of the action of the hydraulic cylinders, which cause the mobile support to move towards the fixed support without closing fully and to a certain degree. Following this, the sludge is loaded by means of the feed pump.

The approach position is adjustable by means of the stroke end with which the unit is equipped. This position is maintained while filling continues, thanks to the pressure provided by the sludge feeding. In this operation, the liquid flows towards the bottom of the bedplate, in which a suitably calibrated sensor is situated.

When the cake has reached a certain dryness, the sensor provides a signal, by means of which the sludge feeding is discontinued and the hydraulic cylinders operate again, providing greater pressure on the plates until a greater degree of dryness is obtained in the cakes, a drynness which is also controlled by a second sensor in the bedplate until it signals the end of the operative process.

With this process, a working system is obtained which is more economical than any of the previously-mentioned conventional ones and has a substantially lower maintenance cost.

Further features and advantages of the invention will be understood from the details, of a non-restrictive nature, shown on the accompanying sheets of drawings, wherein:
- Figure 1 is a side elevational view of the filter press in accordance with the invention.
- Figure 2 is a plan view of Fig. 1.
- Figure 3 is a view of Fig. 1 as seen from the left.
- Figures 4 and 5 show enlarged details of the plates.

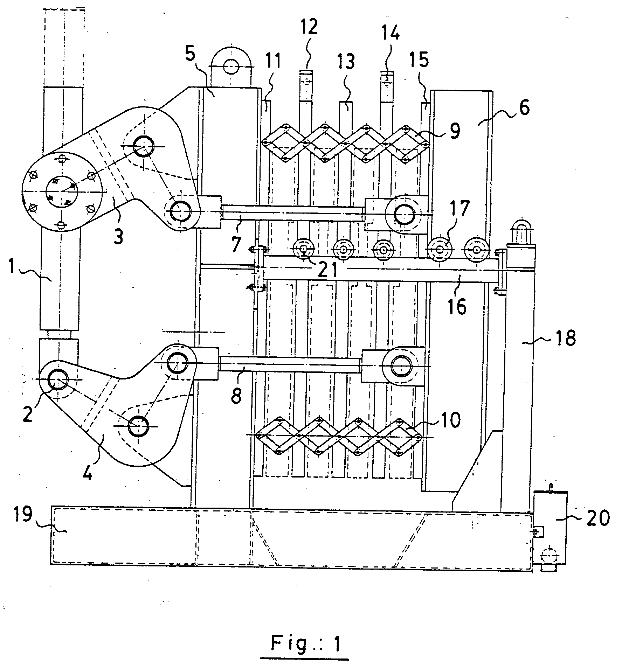

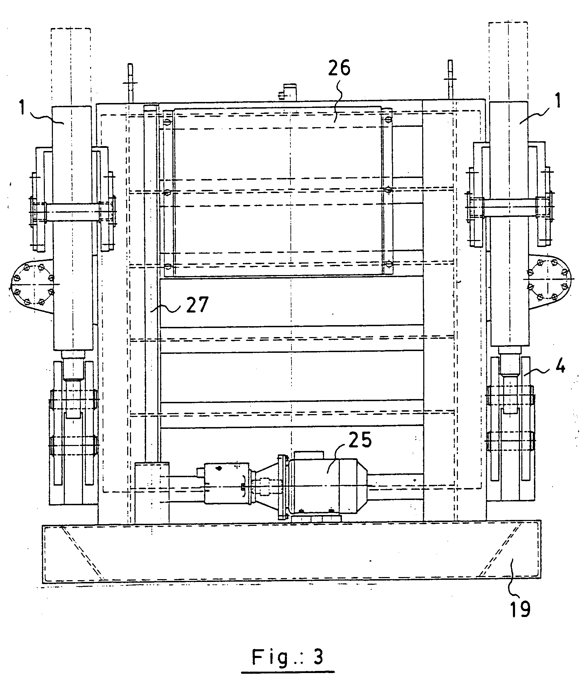

Referring now to Figs. 1 and 3 of the drawings, the bedplate (19) of the press can be observed, to which are secured the first fixed support (5) and the second fixed support (18), with the mobile support (6) placed between them.

The fixed and mobile supports (5, 6) include filtering plates (11, 15), between which the two intermediate plates (12, 14) and the central plate (13) are situated.

All the plates mentioned are connected by means of the two groups of side connecting-rods, upper (9) and lower (10), as can be appreciated. Between the fixed support (5) and the second support (18), the circular cross-section arms (16) can be seen, on which the plates (12, 13, 14, 15) and the mobile support (6) can be moved by means of the runners (21) and (17) respectively.

The approach or withdrawal movemet between the fixed and mobile supports is carried out by means of two pairs of side members (7) and (8) of variable length. These side members are operate by means of the wings or ears (3, 4) mounted onto the hydraulic cylinders (1), by their ends (2) and by the middle portion of the cylinders. The side members are mounted on end ball sockets (22, 23).

The bedplate (19) includes the motorpump (25) as well as the portion (20) in which the sensors are situated. In the same way, in Fig. 3, we can see the sludge tank (26) and the piping for the sludge.

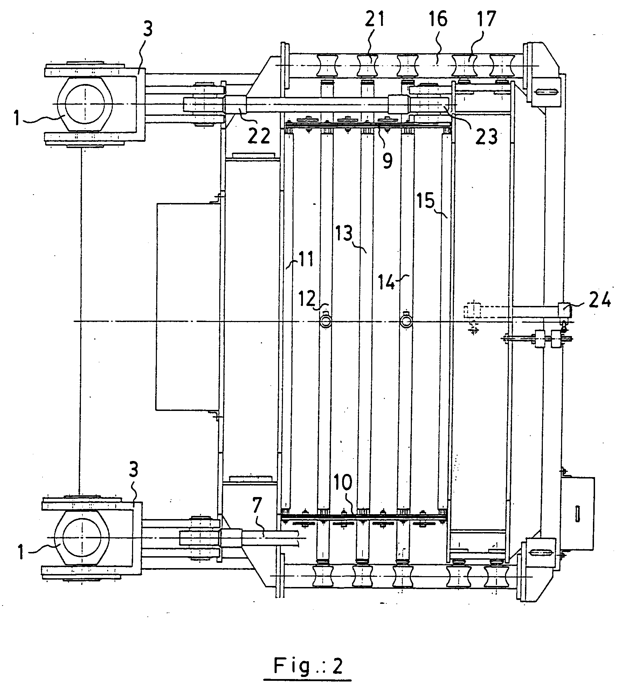

Figure 2 shows the position of the stroke end (24) responsible for controlling the movements of the mobile support (6).

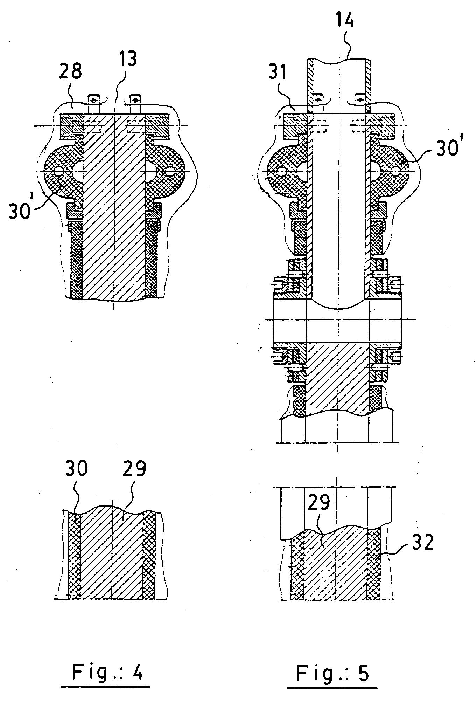

From Fig. 4 we can point out one of the two central plates (13) of the unit. In this figure we can appreciate the external position of the filtering cloth (28), as well as the convex perimetric protrusion (30) through which one plate is in contact with the others, allowing the distance between the plates to be adjusted so as to vary the thickness of the cake.

The filtering plate is numbered with the position (29), with (30) corresponding to the plate.

Figure 5 represents the intermediate plate (14) with its classical configuration, in addition to having the same elements as the previously described plate.

Returning now to the operation of the system, it is appropriate to point out again that the processing commences when the cylinders (1) are activated by the pump, with the aim of moving the mobile support (6) and mobile plate (15) towards the fixed part (5, 11), until it reaches a position which can be adjusted by means of the stroke end device (24). This initial position is maintained during the filling and first pressing, which takes place thanks to the pressure of the sludge provided by the sludge feed pump.

When the first sensor, situated at (20), detects a measurement that corresponds to the degree of dryness of the cake, the sludge feeding is discontinued.

Once the predetermined degree of dryness has been reached, the intake of sludge is discontinued and the hydraulic cylinder operate again on the plates in order to reduce the space occupied by the cakes. Thus, a greater degree of cake dryness is obtained, which in turn can be determined by means of a second sensor.

These operations can be carried out in a simple way by means of a conventional automatic device, combining control of the dryness of the cakes, the sensors, the intake of sludge and the operation of the hydraulic cylinders.

This improvement of the process conditions is affected by the specific provision of the perimetric protrusions on the plates themselves, as pointed out opportunely earlier.

## Claims

**1.-** A filter, of the type which are composed of a series of filtering plates (11, 15), between which cloths are arranged, through which sludge passes, separating the liquid contained in the sludge from the solid material, which is deposited between the cloths to form cakes, which is characterized by the provision of a bedplate (19), to which a first and second vertical support (5, 18) are secured, connected to each other by means of two circular cross-section horizontal arms (16) arranged at the sides, with runners (17, 21) travelling on these arms, in that against the first and second fixed supports is situated a mobile support (6), with the first fixed support and the mobile support being equipped with attached filtering plates (11, 15), between which other intermediate plates (12, 14) are situated, in that the said supports equipped with plates and the other plates receive the runners that run on the bars, with the plates in their turn being connected to each other by two pairs of side connecting-rods (9, 10), upper and lower, in that the filtering and the intermediate plates are provided with front perimetric protrusions (30) of an outwardly convex circular shape, having two pairs of side members (7, 8) that connect the fixed and mobile supports, which are operated by the hydraulic cylinders (3, 4), in that the bedplate receives two sensors to detect the degree of dryness of the cakes and in that the second fixed support has attached an adjustable stroke end switch capable of controlling the closure of the mobile support over the first fixed support and consequently of determining the thickness of the cakes.

**2.-** A filter, in accordance with claim 1, characterized in that the connection ends of the side members (7, 8) are connected to the first fixed support and to the mobile support by ball socket bolts, with those corresponding to the mobile support being connected to the end of a set of wings or ears, fixed at the other side by bearings to the said mobile support and to the hydraulic cylinders.

**3.-** A filtering method, characterized in that it is firstly carried out by the filtering plates (11, 13, 15) moving towards each other, controlled by a stroke end attached to the second fixed support, which when reached signals the start of sludge feeding between the plates, with this sludge being filtered until a first sensor situated in the bedplate detects a predetermined degree of dryness in the cakes, thus discontinuing the sludge feeding and then performing a greater pressing until a second calibrated sensor detects the required degree of dryness in the cakes and interrupts the process.

**4.-** A filtering method, in accordance with claim 3, characterized in that during the sludge feeding stage, the entry or intake pressure of the sludge provides the first filtering, with a value of approximately 4 to 5 Kg/cm.
